# EUROPÄISCHE PATENTSCHRIFT

(11) **EP 2 314 427 B1**
(45) Veröffentlichungstag und Bekanntmachung des Hinweises auf die Patenterteilung: **06.04.2016**
(21) Anmeldenummer: 10187622.5
(22) Anmeldetag: 14.10.2010
(51) Int. Cl.: G01S 17/02, G01S 17/89, G01S 7/481, G01S 17/10

(54) **Verfahren und Vorrichtung zur Steuerung von elektrischen Geräten mittels Bewegungsdetektion**
Method and device for controlling electrical devices by means of motion detection
Procédé et dispositif de commande pour la commande d'appareils électriques par détection de mouvements

(30) Priorität: 23.10.2009 DE 102009050574
(43) Veröffentlichungstag der Anmeldung: 27.04.2011
(73) Patentinhaber: Silicon Micro Sensors GmbH, 01099 Dresden (DE)
(72) Erfinder: Busse, Erik, 04600 Altenburg (DE); Prinz von Hessen, Wilhelm, 01445 Radebeul (DE)
(74) Vertreter: Lippert, Stachow & Partner

(56) Entgegenhaltungen:
- WO-A1-2008/154736
- DE-A1- 10 306 023
- DE-A1- 10 361 115
- US-A1- 2004 046 661
- US-A1- 2008 284 564
- US-B1- 6 236 333
- US-B1- 6 323 941

## Beschreibung

Die Erfindung betrifft allgemein die Ansteuerung von elektrischen Geräten aufgrund einer dreidimensionalen Bewegungsdetektion von Objekten in einem Überwachungsraum. Sie betrifft insbesondere eine dazu verwendbare Steuervorrichtung unter Verwendung eines geeigneten, auch Abstandsinformationen liefernden und örtlich auflösenden Bewegungsdetektors sowie ein Verfahren zur Steuerung externer elektrischer Geräte unter Verwendung solch einer Steuervorrichtung, welche einen geeigneten, auch Abstandsinformationen liefernden und örtlich auflösenden Bewegungsdetektors verwendet.

Es ist bekannt, mittels verschiedenartiger Bewegungsdektoren die Anwesenheit von Personen in einem bestimmten Erfassungsgebiet eines Raumes anhand elektromagnetischer Strahlung oder Schallwellen festzustellen und anhand der Detektion ein verbundenes externes elektrisches Gerät zu steuern. Hier ist allgemein das Einschalten von Beleuchtung oder Kameras bekannt, die mit einem Bewegungsdetektor kombiniert sind und aktiviert werden, sobald der Detektor ein Objekt im Überwachungsraum, allgemein als Event bezeichnet, ermittelt. Aber auch komplexere Systeme sind anhand von Bewegungsdetektion zu steuern, z.B. kollisionsfreie Steuerung von Robotern in automatisierten Anlagen. Voraussetzung ist dafür, dass infolge der Bewegungsdetektion ein Ausgangssignal erzeugt wird, welches für die Steuerung des verbundenen Gerätes verwendbar ist. Da dieses Ausgangssignal regelmäßig, gegebenenfalls auch über verschiedene Transformationen elektrischer Natur ist, soll nachfolgend das damit zu steuernde externe Gerät allgemein als elektrisches Gerät bezeichnet sein.

Während bei aktiven Bewegungsdetektoren eine künstliche Quelle elektromagnetische oder Schallwellen erzeugt, um an deren Änderung die aktuelle Situation im Erfassungsgebiet zu ermitteln, nutzen passive Bewegungsdetektoren die im Erfassungsgebiet mit oder ohne Anwesenheit einer Person vorhandenen Wellen.

Zu den passiven Detektoren gehören insbesondere Infrarot-Bewegungsdetektoren, die im fernen Infrarotbereich arbeiten und die Wärmestrahlung einer im Erfassungsbereich anwesenden Person nutzt. Die mit der Bewegung einer Person verbundene Änderung der Wärmestrahlung induziert im Sensor des Bewegungsdetektors ein elektrisches Signal, welches durch geeignete Signalaufbereitung für die Verwendung in einer anschließenden Schaltstufe, häufig dem Stellglied eines Regelkreises wie zum Beispiel der Schaltung und dem Dimmen von Beleuchtung in Abhängigkeit von der umgebenden Helligkeit, zur Verfügung gestellt wird. In der US 6,236,33 B1 wird zur Erkennung eines Fahrzeugschlüssels anstelle Wärmestrahlung die magnetische Flussdichte fortlaufend gemessen, so dass aus deren Änderung auf die Anwesenheit des Fahrzeugschlüssels, welcher ein Dauermagnet aufweist, geschlossen und ein Signal generiert werden kann.

Zu den passiven Bewegungsdetektoren gehört auch der so genannte Reichardt-Detektor, der Helligkeitsänderungen in der Umgebung erfasst. Hier werden Bewegungsabläufe örtlich aufgelöst, d.h. die Richtung einer Bewegung erfasst, indem Signale von mehreren, zumindest zwei benachbarten Empfängern zueinander verzögert und verknüpft werden. Ein solcher Bewegungsdetektor wird als EMD-Sensor (EMD - Elementary Motion Detector) bezeichnet. Durch Verwendung vieler EMDs ist ein richtungs- und auch geschwindigkeitsspezifisches Signal zu erhalten und bei geeigneter EMD-Anordnung innerhalb eines EMD-Arrays ein gesamter Halbraum zu erfassen. Beispielsweise sind damit in Fahrzeugassistenzsystemen die Geschwindigkeit, auch Winkelgeschwindigkeit, sowie die Bewegungsrichtung eines sich einem Fahrzeug nähernden Objekts zu ermitteln.

Für aktive Bewegungsdetektoren werden verschiedene Signale verwendet, aus deren Reflexion an einem Objekt die Anwesenheit des Objekts im Überwachungsraum oder deren Bewegung als auch verschiedene andere Werte ermittelt werden (WO 2008/154736). So sind Bewegungsdetektoren bekannt, die mittels vom Detektor ausgesendeter Ultraschallimpulse unter Nutzung des Dopplerprinzips über Laufzeitmessungen Entfernung, Geschwindigkeit und Beschleunigung eines Objekts bestimmen können.

Eine dreidimensionale Objekterkennung, die auch Abstandsinformationen zum Objekt umfasst, erfolgt häufig mittels Stereokamera oder Scannersysteme, die jedoch sehr aufwändig und kostenintensiv sind. Eine Abstandsinformation ist bereits durch ein so genanntes Lidar-System zu erhalten, das einen im Pulsbetrieb arbeitenden Strahler, regelmäßig ein Infrarot-Laser, eine Fotodiode, z.B. Avalanche-Dioden, als Empfänger und eine Auswerteelektronik umfasst. Aus Laufzeitmessungen der ausgesendeten und vom Objekt reflektierten Strahlung wird in der Auswerteelektronik der Abstand zum Objekt ermittelt. Ein in eine Fahrzeugleuchte integriertes Lidar-System ist in der DE 10 2006 044 794 A1 beschrieben.

Die Laufzeitmessung ist mittels Pulsmessverfahren oder mittels Ermittlung aus der Phasenverschiebung von moduliertem Licht. Während beim Pulsmessverfahren Laufzeitunterschiede zwischen Lichtpulsen ausgewertet werden, die an einem Objekt reflektiert werden oder nicht, wird zur Auswertung der Phasenverschiebung kontinuierlich ausgesendetes Licht und dessen Änderung infolge einer Reflexion an einem Objekt zugrunde gelegt,

Zur dreidimensionalen Erfassung werden mehrere, in den Überwachungsraum gespreizte Sende- oder Empfangseinrichtungen oder eine Kombination von beidem verwendet, so dass bei Kanaltrennung die gewünschte Objektposition ermittelt werden kann. In der DE 10 2005 006 921 A1 beispielsweise wird zur Erkennung einer Objektkontur ein Array von PIN-Fotodioden beschrieben, die als Strahlungsdetektoren in zwei oder mehr beabstandeten Streifen zueinander auf einem Träger angeordnet sind. Über Laufzeitmessungen der von einer gepulsten Strahlungsquelle ausgesendeten Strahlung sind Objekte dreidimensional abbildbar.

Ein Nahbereichssensor, der für die Tote-Winkel-Detektion oder die Parklückenvermessung in Fahrerassistenzsystemen eingesetzt wird, umfasst gemäß der DE 10 2004 062 022 A1 hingegen eine Zeile von pulsförmig ansteuerbaren Sendeelementen, ein weiteres versetzt dazu angeordnetes und nach unten strahlendes Sendeelement und eine Empfangseinrichtung zur gemeinsamen Auswertung von an Objekten reflektierter Strahlung. Auch hier erfolgt die Detektion von Objekten mittels Laufzeitmessung.

Diese Detektionssysteme arbeiten kontinuierlich oder nach manueller oder automatischer Initialisierung durch ein übergeordnetes oder Gesamt-System, so dass die Integration von Entfernungs- oder Bewegungsdetektoren in ein in Betrieb befindliches System wie ein Fahrerassistenzsystem hinsichtlich der Betriebsbereitschaft unproblematisch ist. Ist hingegen das übergeordnete oder Gesamt-System deaktiviert, ist gegebenenfalls eine Energiespeicherung erforderlich, um das Detektionssystem in Bereitschaft zu halten. Da gerade bei Fahrzeugen die Standzeiten sehr lang sein können, belasten Standbyzeiten des Detektionssystems die Fahrzeugbatterie nicht unerheblich. Aber auch für den Detektionsbetrieb sollen aufgrund der hohen Anzahl von Verbrauchern im Gesamtsystem und aufgrund der Forderungen nach verbesserter Energieeffizienz die Leistungsaufnahme vermindert werden.

Es ist somit Aufgabe der Erfindung, ein Verfahren zur Steuerung von externen elektrischen Geräten mittels dreidimensionalen Bewegungsdetektion anzugeben, welche kostengünstig herstellbar sind und sowohl eine geringe Leistungsaufnahme im Standby-Modus als auch während des Betriebs der Vorrichtung aufweisen. Das Verfahren soll darüber hinaus für verschiedene Verbraucher im Gesamtsystem anwendbar sein.

Mithilfe des nachfolgend beschriebenen Verfahrens, wird die gesamte Leistungsaufnahme vermindert, indem nacheinander und in Abhängigkeit von den vorangegangenen Verfahrensschritten verschiedene Zustände durchlaufen werden, die durch zunehmende Leistungsaufnahme gekennzeichnete. Durch die Festlegung der verschiedenen Zustände anhand der darin durchzuführenden Messungen und die Verifizierung der Notwendigkeit für den nächsthöheren Systemzustand anhand der aktuell messbaren Situation im Überwachungsraum, konnte die notwendige Leistungsaufnahme für die Gerätesteuerung in der Summe minimiert werden. Dennoch ist das Gesamtsystem mit dem Starten des Hauptzyklus, welcher dem kompletten Steuerungsverfahren zugrunde liegt, in fortlaufender Bereitschaft zur unverzüglichen Ansteuerung des externen elektrischen Geräts.

Im ersten Systemzustand, einem Bereitschaftszustand oder Sleep-Modus, werden lediglich Einzelmessungen durchgeführt, die durch einzelne und kurze Signale einen minimalen Energieverbrauch haben. Diese Messungen dienen einerseits der Überwachung der Umgebung und der Identifizierung eines grundsätzlich geeigneten Events, um gegebenenfalls in den nächsten, die Steuerung einleitenden Betriebszustand überzugehen. Andererseits dienen sie auch dem Ausschluss von Ereignissen, die dem relevanten Ereignis vergleichbar sind und damit grundsätzlich geeignet wären, aber dennoch nicht der Steuerung dienen sollen. Dieser Ausschluss erfolgt über die Festlegung von Bedingungen, die das zuvor identifizierte Event erfüllen muss, um weiterhin als relevant verifiziert zu werden.

Die Minimierung des Energieaufwandes bei fortlaufender Vorhaltung der Bereitschaft der Vorrichtung zur Steuerung durch ein gestaffeltes Verfahren mit Identifizierung, Verifizierung und Ausschlusskriterien wird unterstützt durch die Unterteilung des Überwachungsraumes in einen Vorwarnbereich und einen Detektionsbereich. Im Vorwarnbereich detektierte Events führen stets nur zu einem nächsten Identifizierungs- oder Verifizierungsschritt. Damit ist zwar die Bereitschaft hergestellt, jedoch ist die Möglichkeit des Ausschlusses eines Events hier noch höher. Wird hingegen das Event bereits im Detektionsbereich detektiert, sind die Schritte bis zur Auslösung der Steuerung regelmäßig bereits reduziert, so dass die Ausschlusskriterien an Bedeutung verlieren.

Dieser grundsätzliche Verfahrensablauf mit gestaffeltem Systemzustand in Verbindung mit einer Staffelung des Überwachungsraumes in weniger und mehr relevante Bereiche ist auf verschiedene Arten von Entfernungsmessungen anwendbar. Voraussetzung ist für die Wahl des Detektionsverfahrens, dass die Entfernungsmessung die Zuordnung des Events zum Vorwarnbereich und zum Detektionsbereich gestattet. Eine exakte Bestimmung der Entfernung des Events bis zum Sensor ist möglich, jedoch nicht erforderlich.

Dementsprechend wird in einer Ausgestaltung des Verfahrens für die durchzuführenden Entfernungsmessungen das Pulsmessverfahren angewendet. Die nachfolgende Beschreibung soll beispielhaft, nicht jedoch beschränkend anhand dieses Verfahrens erfolgen.

Beide Aspekte, Identifizierung und Verifizierung, erfolgen durch vergleichbare Entfernungsmessungen, bei denen lediglich Anwesenheit oder Abwesenheit einer Reflexion eines ausgesendeten Lichtpulses, d.h. eines den gesamten Überwachungsraum erfassenden optischen Pings, innerhalb eines auf die Ausdehnung des Überwachungsraumes abgestimmten Messfensters festzustellen ist. Damit reduziert sich der Aufwand hinsichtlich Zeit und Technik sowohl für die Messung als auch für die Auswertung. Die Steuerungsvorrichtung befindet sich gewissermaßen noch in einem Sleep-Modus, identifiziert und verifiziert aber bereits.

Auch wenn die Identifizierung sowohl im Vorwarn- als auch im Detektionsbereich erfolgen kann, ist eine positive Verifizierung an den Detektionsbereich geknüpft. Um für die Verifizierungsmessung bereits mit nur einer Messschleife zu einer eindeutigen Verifizierung als positiv oder negativ zu kommen, wird entsprechend einer weiteren Ausgestaltung des Verfahrens der Zeitpunkt t₂, zu welchem die Verifizierungsmessung erfolgen sollte, für eine positive Verifizierungsmessung kalkuliert. Dazu wird eine Zeitdifferenz Δ(t₂-t₁) ermittelt, innerhalb der das Event sich mit hoher Sicherheit im Detektionsbereich befindet.

Dieser Kalkulation werden der Zeitpunkt t₁, zu dem eine positive Identifikation erfolgte, eine durchschnittliche Geschwindigkeit des Events sowie der mögliche Bewegungsradius im Überwachungsraum zugrunde gelegt. Der mögliche Bewegungsradius schließt die Position des Events zum Zeitpunkt t₁ sowohl im Vorwarnbereich als auch im Detektionsbereich ein.

Erst wenn sowohl Identifizierung als auch Verifizierung positiv sind, wird der nächsthöhere Systemzustand, der Betriebszustand aktiviert und ein Messzyklus gestartet. Dieser umfasst umfangreichere Messungen zur Ermittlung der Position im Detektionsbereich und weist deshalb einen höheren Energieverbrauch auf. Aufgrund der zuvor zu erfüllenden Voraussetzungen, wird dieser Betriebszustand jedoch nur in offensichtlich relevanten Situationen aktiviert, so dass die Forderung nach Minimierung der Leistungsaufnahme für das gesamte Steuerungsverfahren erfüllt werden kann. Auch für diesen Schritt sind grundsätzlich verschiedene Messverfahren geeignet.

Energie und technischer Aufwand lassen sich entsprechend einer Ausgestaltung des Verfahrens vermindern, wenn auch diese Messungen zur Feststellung der Position des Events in dem Bereich des Überwachungsraums dient, in welchem Steuerungen ausgelöst werden und dazu Bewegungen eindeutig örtlich und zeitlich identifizierbar sein sollen, mittels Pulsmessverfahren und folglich die Auswertung an den am Event reflektierten Pulsen erfolgen. Erst wenn, unabhängig vom verwendeten Messverfahren, auch die Positionsmessung die vordefinierten Bedingungen erfüllt, erfolgt die Steuerung des externen elektrischen Gerätes. Dieses zusätzliche Ausschlussverfahren, dass sich zudem auf den Detektionsbereich beschränkt ist, dient sowohl der Sicherung vor als auch der Energieeinsparung aufgrund unbeabsichtigter Auslösung der Generierung des Ausgangssignals.

Die eigentliche Steuerung des externen elektrischen Gerätes, d.h. eines elektrischen Gerätes außerhalb der Steuervorrichtung, erfolgt mittels eines analogen und auswertbaren Ausgangssignals, das in der Steuervorrichtung generiert und an das Gerät übertragen wird. Damit ist ein Durchlauf eines Steuerungsverfahrens abgeschlossen, so dass der Hauptzyklus beendet und die Steuerungsvorrichtung in einen Ruhezustand versetzt werden kann. In diesem erfolgen keine weiteren Messungen.

Die Generierung des Ausgangssignals erfolgt erst nach vollständigem Abschluss der vorangegangenen Messverfahren, so dass es entsprechend einer Ausgestaltung des Verfahrens zur weiteren Verminderung des Energieaufwandes möglich ist, den Funktionsblock der Steuerungsvorrichtung, welcher der Entfernungsmessung dient und als Entfernungs-Block bezeichnet sein soll, vor der Generierung des Ausgangssignals zu deaktivieren.

Sofern, wie oben dargelegt, in einer Ausgestaltung des Steuerungsverfahrens das Pulsmessverfahren verwendet wird, ist eine Positionsbestimmung bereits auf einfache Weise über den Vergleich der Parameter der reflektierten Pulse mit vorgegebenen Messwertbereichen möglich. Denn auch die Positionsbestimmung ist nur mit solch einer Genauigkeit erforderlich, die durch die Größe des Detektionsbereichs vorgegeben ist.

Da für mehrere der beschriebenen Verfahrensschritte ein Vergleich mit gespeicherten Messwerten erfolgen soll, ist eine Kompensation der Schwankungen in der Umgebungshelligkeit anhand deren Ermittlung als optische Grundlast vorteilhaft. Der Minimierung des technischen Aufwandes dient auch die Messung der Umgebungshelligkeit mittels Pulsmessverfahren. Damit ist es möglich, die Komponenten der Steuerungsvorrichtung, die für die eigentlichen Messungen verwendet werden, auch für diese Messung einzusetzen.

Eine weitere Ausgestaltung des Steuerungsverfahrens ermöglicht es, die Generierung des Ausgangssignals an sich oder hinsichtlich seiner Art an eine bewusste Aktion des Events zu knüpfen. Dies erfolgt über eine örtlich und zeitlich selektierte Detektion eines Bewegungsablaufs des im Detektionsbereich befindlichen Events, die mittels eines Funktionsblocks zur örtlich und zeitlich selektierten Detektion von Bewegungsabläufen im Detektionsbereich, nachfolgend als Bewegungs-Block bezeichnet, erfolgt.

Erst die Auswertung des detektierten Bewegungsablaufs führt zur Entscheidung über das Ausgangssignal. Damit ist ein weiteres Ausschlusskriterium vor der Generierung des Ausgangssignals implementierbar oder verschiedne Ausgangssignale sind mit einem Verfahren und einer Vorrichtung generierbar. Diese können ein externes elektrisches Gerät unterschiedlich oder mehrere Geräte separat ansteuern.

Grundsätzlich sind auch für diese Bewegungsdetektion verschiedene Detektionsverfahren einsetzbar. Die Verwendung der für die Entfernungsmessung eingesetzten Vorrichtung, gegebenenfalls mit einer Änderung der Konfiguration und/oder mit angepassten Lichtsendern, ist möglich, sofern in einer Ausgestaltung des Verfahrens die örtlich und zeitlich selektierende Detektion von Bewegungsabläufen mittels Sensierung der Änderung der Helligkeitswerte einer Anordnung von Fotodioden infolge des Bewegungsablaufs erfolgt.

Dabei erfolgt die Detektion der Bewegungsabläufe mittels Sensierung der Helligkeitswerte des Lichts, die sich im Verlauf der Bewegung für die einzelnen Fotodioden der Diodenanordnung der Steuerungsvorrichtung unterschiedlich ändern. Der Bewegungsablauf ist aus dem Vergleich der in den einzelnen Dioden induzierten Ströme reproduzierbar. In einer geeigneten Auswerteelektronik erfolgen die Aufbereitung und die Verarbeitung der Signale der einzelnen Fotodioden zur Erkennung des Bewegungsablaufs, z.B. die Bewegung einer Hand von oben nach unten oder eines Fuße in Richtung des Sensors. Mithilfe einer Entscheidungslogik erfolgt die Generierung eines für den detektierten Bewegungsablauf festgelegtes Ausgangssignals.

Die Verwendung von Fotodioden ermöglicht die Bewegungsdetektion auch bei geringen Lichtstärken, begrenzt durch das Rauschverhalten, und über einen großen Wellenlängenbereich.

Die Auflösung des Raumwinkels des einfallenden Lichts und dessen Intensitätsänderung erfolgt über eine linien- oder netzartige Anordnung einer Mehrzahl von Fotodioden. Eine solche Anordnung kann z.B. durch geeignete Abstände zwischen den Fotodioden oder die Ausbildung einer gewölbten Einfallsfläche der Gesamtheit der Fotodioden. Alternativ oder ergänzend kann den Fotodioden eine korrespondierende Anordnung optischer Bauteile zugeordnet sein, z.B. ein vorgesetztes Linsensystem und eine Oberflächenstrukturierung der Fotodioden. In letzterem Fall sind die besagten optischen Bauteile in der Fotodiodenanordnung integriert.

Mittels dieser oder ergänzender optischen Bauteile sind auch Anpassungen an bestimmte Messbedingungen möglich, wie z.B. eine Filterung oder eine Auswahl definierter Lichteinfallswinkel oder Vorzugsrichtungen.

Des Weiteren gestattet die Detektion eines Bewegungsablaufs über die Änderung der Intensität des einfallenden Lichts auch die örtliche Trennung zwischen der Steuerungsvorrichtung und dem Überwachungsraum. Es ist lediglich eine optische Kopplung über transparente Trennwände notwendig. Diese Bewegungsabläufe können folglich, ob in einem separaten, nur optisch verbundenen Raum oder nicht, sowohl durch eine Person als auch durch eine Vorrichtung ausgeführt werden, in letzterem Fall z.B. zur Steuerung oder Initialisierung automatisierter Abläufe.

Der beschriebene Bewegungs-Block ist im Gegensatz zum der Entfernungsmessung dienenden Entfernungs-Block als Passivdetektor zu betreiben, so dass im Gegensatz zur Aufnahme von Bewegungsabläufen mittels einer Kamera gemäß Stand der Technik deutlich geringere Ruheströme erzielbar sind. Sofern jedoch die Umgebungshelligkeit zu gering ist, kann entsprechend einer weiteren Ausgestaltung des Verfahrens ein Mindestwert zumindest während der Detektion eingestellt werden, indem eine zusätzliche Lichtquelle eingesetzt wird.

Die zeitliche Trennung von Entfernungsmessung und Bewegungsdetektion gestattet es, zur weiteren Energiereduzierung von den einzelnen Funktionsblöcken nur den jeweils verwendeten zu aktivieren. Darüber hinaus können auch die Fotodioden der Steuerungsvorrichtung als Solarzellen geschalten werden und für den Zeitraum des Ruhezustands, in dem sie nicht für das Steuerungsverfahren verwendet werden, der Energiegewinnung dienen.

Zur Ausführung des Steuerungsverfahrens wird eine Steuerungsvorrichtung angegeben, welche folgende grundsätzliche, strukturelle Komponenten aufweist. Die Steuerungsvorrichtung umfasst einen Lichtsender zur Abstrahlung von Licht in den Überwachungsraum. Der Lichtsender ist für den Entfernungs-Block gemäß obiger Beschreibung des Verfahrens unabdingbarer Bestandteil, für den Bewegungs-Block jedoch nur optional hinzuschaltbar. Dementsprechend ist der Lichtsender sowohl im Pulsbetrieb als auch kontinuierlich betreibbar. Alternativ können für die oben beschriebenen voneinander abweichenden Funktionen im Entfernungs- und Bewegungs-Block oder für den Einsatz in verschiedenen Anwendungsfällen auch mehrere Lichtsender angeordnet sein, die sich möglicherweise in ihren Wellenlängenbereichen unterscheiden.

Die Steuerungsvorrichtung umfasst weiter eine Anordnung von mehreren, in zumindest zwei Zeilen angeordneten Fotodioden, z.B. PIN- oder Avalanche-Dioden als Lichtempfänger zum Empfang von Strahlung, die infolge von Reflexion an einem, im Überwachungsraum befindlichen Objekt auf diese Diodenanordnung trifft.

Des Weiteren ist eine Steuerelektronik zur Ansteuerung des Lichtsenders und der Lichtempfänger angeordnet, so dass der Lichtsender Pulse verschiedener Länge und/oder Intensität und/oder Taktung abstrahlt. Mittels der Steuerelektronik wird darüber hinaus realisiert, dass zumindest einige der Lichtempfänger nacheinander entweder dem Messsystem zur Entfernungsmessung, dem Entfernungs-Block, oder dem Messsystem zur örtlich und zeitlich selektierende Detektion von Bewegungsabläufen, dem Bewegungs-Block, zugeordnet sind.

Die Steuerungsvorrichtung umfasst auch eine Auswerteelektronik zur Auswertung von gesendeter und/oder empfangener Strahlung, zur Speicherung von charakteristischen Werten von Lichtpulsen sowie von Verteilungscharakteristiken der Fotodiodenströme, die über die Fläche der Diodenanordnung zeitlich oder flächenmäßig selektiert sind, und zum Vergleich detektierter und gespeicherter optischer Signale sowie Verteilungscharakteristiken.

Zur Generierung des erforderlichen, gegebenenfalls variablen Ausgangssignals ist außerdem ein Signalgenerator angeordnet, mit welchem ein Ausgangssignal zur Steuerung eines externen elektrischen Geräts zu erzeugen und an das externe elektrische Gerät zu übertragen ist.

Diese Komponenten bilden infolge der entsprechenden Ansteuerung durch die Steuerelektronik die beiden benannten Funktionsblöcke, die den jeweiligen Systemszuständen zugeordnet sind. Da beide Funktionsblöcke unabhängig vom jeweils anderen, d.h. ohne Zugriff auf den anderen arbeiten, sind sowohl getrennte Strukturen, aber ebenso die Verwendung von Komponenten der Steuerungsvorrichtung zunächst für den einen und später für den anderen Funktionsblock möglich. Um die Adaption einer Steuerungsvorrichtung an verschiedene Anwendungsfälle zu ermöglichen, kann die Diodenanordnung mehr Fotodioden umfassen, als für jeden der beiden Funktionsblöcke erforderlich sind. Eine solche Adaption kann z.B. die Größe oder Gestalt des Überwachungsraumes betreffen. In solch einem Fall kann nach der Adaption ein Teil der Diodenanordnung fest mit dem einen und ein anderer Teil fest mit dem anderen Funktionsblock verbunden oder einer ergänzenden Funktion, wie der Adaption der Umgebungshelligkeit zugeordnet sein.

Die vorgeschlagene Steuervorrichtung ist des Weiteren als kompakter Sensor-IC ausführbar, d.h. einem komplexen Systembaustein, in dem die wesentlichen Bestandteile wie die Lichtempfänger und Lichtsender sowie die Steuer- und Auswerteelektronik und der Signalgenerator in einer Ausgestaltung der Steuerungsvorrichtung monolithisch integriert, d.h. auf einem Halbleiterchip angeordnet sind. Damit ist die Steuerungsvorrichtung variabel einsetzbar zu gestalten und eine wesentliche Reduzierung der Abmessungen gegenüber einer aus einzelnen Komponenten diskret auf einer Leiterplatte aufgebauten Ausgestaltung möglich. Gegenwärtig ist eine Reduzierung auf bis zu einem Achtel der Grundfläche realisierbar, wobei die elektrische Kontaktierung über seitlich am Gehäuse angeordnete Kontakte erfolgt. Mit zunehmender Skalierung aber auch in Abhängigkeit vom Einsatzort sind auch noch kleinere Abmessungen möglich. Sofern in einer optionalen Ausgestaltung die diskrete Aufbauvariante zur Anwendung kommt, sind die Kontakte, z.B. Stecker auf der Sensorseite der Leiterplatte angeordnet, während die Komponenten der Steuerungsvorrichtung beidseitig angeordnet sein können.

Die Erfindung soll nachfolgend anhand eines Ausführungsbeispieles näher erläutert werden. In der zugehörigen Zeichnung zeigt in
- Fig. 1: einen gehäusten Sensorchip als monolithisch integrierte Steuerungsvorrichtung;
- Fig. 2: ein Blockschaltbild eines Sensorchips gemäß Fig.1;
- Fig. 3: die Lage eines Überwachungsraums in Bezug auf die Lage eines Sensorchips;
- Fig. 4A, 4B: ein Programmablaufplan zur Ausführung des erfindungsgemäßen Verfahrens zur Steuerung von externen elektrischen Geräten;
- Fig. 5A, 5B: ein Programmablaufplan einer Ausgestaltung des Steuerungsverfahrens gemäß Fig. 4A, 4B

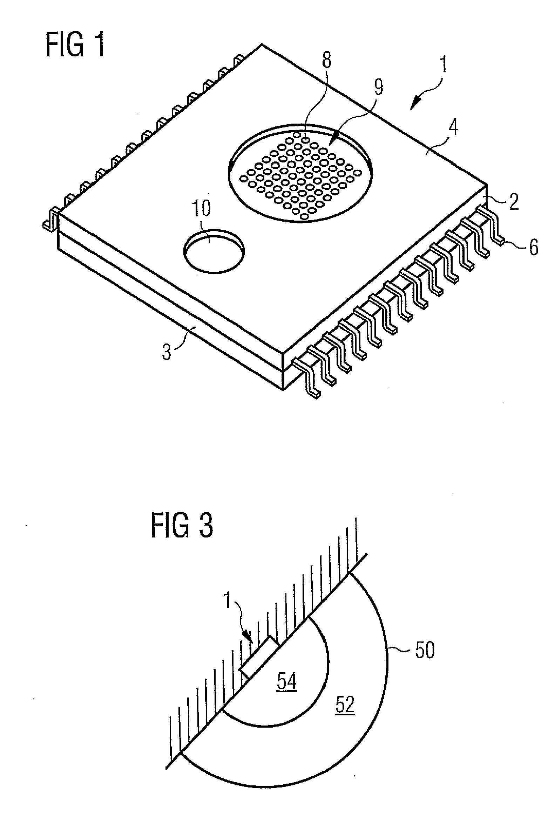

Der Ausführung der nachfolgend beschriebenen Steuerungsverfahren liegt ein gehäuster Sensorchip 1 gemäß Fig. 1 zugrunde.

Die Fig. 1 zeigt ein Ausführungsbeispiel eines erfindungsgemäßen Sensorschips 1 in seinem Package 2. Als Package 2 wird allgemein die direkte Ummantelung eines Chips verstanden, die häufig aus einer Vergussmasse hergestellt ist, die den elektrischen und mechanischen Anforderungen entspricht und deren Material auf die zu erwartenden chemischen und thermischen Belastungen abgestimmt ist. Das Package 2 ist im Ausführungsbeispiel als QFP-Ummantelung (Quas Flat Package - QFP) mit einer flachen rechteckigen Form, dessen elektrische Anschlüsse 6, allgemein als Pins bezeichnet, an den Seitenkanten angeordnet sind. Mit einer solchen Gestalt und Anschlussausführung ist der Sensorchip 1 in verschiedenen Systemen durch geeignete Umgehäusung integrierbar.

Das Package 2 ist opak ausgebildet, mit einer transparenten Kappe 4 oberhalb der Lichtempfänger 8, einer nachfolgend beschriebenen Anordnung von Fotodioden, und der Lichtsender 10. Opake Umhüllung 3 und transparente Kappe 4 weisen eine Festigkeit für Betriebstemperaturen im Bereich zwischen - 40°C und +105°C auf. Die Kappe 4 besteht im Ausführungsbeispiel wahlweise aus Macrolon oder aus Aspec, beides Materialien, die eine ausreichende Transmission aufweisen und ausreichend temperaturbeständig für den Einsatz des Sensorchips 1 in Kraftfahrzeugen ist.

Die Kappe 4 oder eine spezielle Abdeckung für den Lichtsender 10 und/oder die Lichtempfänger 8 können als Filter für bestimmte Wellenlängebereiche, die für die dreidimensionale Bewegungsdetektion verwendet werden, und/oder als Streuscheibe ausgeführt sein, um eine räumliche Streuung des vom Lichtsender 10 abgestrahlten Lichts zu erzielen und so mit nur einem Ping den gesamten Überwachungsraum zu erfassen.

Der Sensorchip 1 enthält als aktive Komponenten eine Diodenanordnung 9 von acht mal acht Halbleiter-Fotodioden, die beispielsweise als Avalanche-Fotodioden ausgeführt sind.

Durch die Verstärkungswirkung der Avalanche-Fotodioden 4 ist eine Beschränkung der aktiven Fläche der genutzten Dioden auf einen sehr kleinen Bereich möglich. Damit kann die für den Sensorchip 1 benötigte Fläche wesentlich reduziert werden. Die Verwendung von Avalanche-Dioden ermöglicht durch ihre Verstärkungswirkung zudem eine Kompensation von Reflexionsverlusten infolge der Streuscheibe selbst bei hoher Streuwirkung. Alternativ sind auch PIN-Dioden anwendbar, z.B. wenn die Integration des Sensorchips 1 in das Gesamtsystem eine maximal mögliche Flächenreduzierung nicht erfordert.

Die Diodenanordnung 9 dient sowohl der Entfernungsmessung als auch der örtlich und zeitlich selektierenden Bewegungsdetektion, indem die jeweils dafür verwendeten Fotodioden 4 mit der Aktivierung des für die verschiedenen Messaufgaben zuständigen Funktionsblocks durch die Software des Sensorchips 1 aktiviert oder gegebenenfalls auch konfiguriert werden. Die Anzahl und die Anordnung der für einen Funktionsblock verwendeten Fotodioden 4 können für jede der Anwendungen gleich sein, sich aber auch voneinander unterscheiden. Die Lichtempfänger 8 sind an sich oder über geeignete Filter vorzugsweise für Licht im nahen Infrarotbereich, im Ausführungsbeispiel im Bereich von 840 nm bis 860 nm ausgelegt. Die Fotodioden 8 dienen sowohl der Entfernungsmessung als auch der örtlich und zeitlich selektierenden Bewegungsdetektion, entsprechend der jeweiligen Aktivierung der Funktionsblöcke.

Der Sensorchip 1 umfasst weiter eine LED als Lichtsender 10. Alternativ sind auch andere Lichtsender 10 oder mehr als einer verwendbar, beispielsweise Laserdioden oder Infrarot-Sendedioden. Für die Entfernungsmessung ist die LED pulsförmig ansteuerbar, so dass einzelne als auch Reihen von Pulsen mit einstellbarer Pulsweite und Intensität zu erzeugen sind. Die Wellenlängen des vom Lichtsender 10 ausgesendeten Lichts liegen für dem oben angeführten Wellenlängenbereich der Lichtempfänger 8 im sichtbaren bis nahinfraroten Licht, d.h. im Bereich zwischen 700 nm und 950 nm.

Des Weiteren umfasst der Sensorchip 1 eine anwendungsspezifische integrierte Schaltung (in Fig. 1 nicht sichtbar) zur Signalkonditionierung, zur Auswertung der empfangenen Signale und zur Erzeugung von auswertbaren, analogen Ausgangssignalen. Lichtempfänger 8, Lichtsender 10 und integrierte Schaltung sind monolithisch integriert.

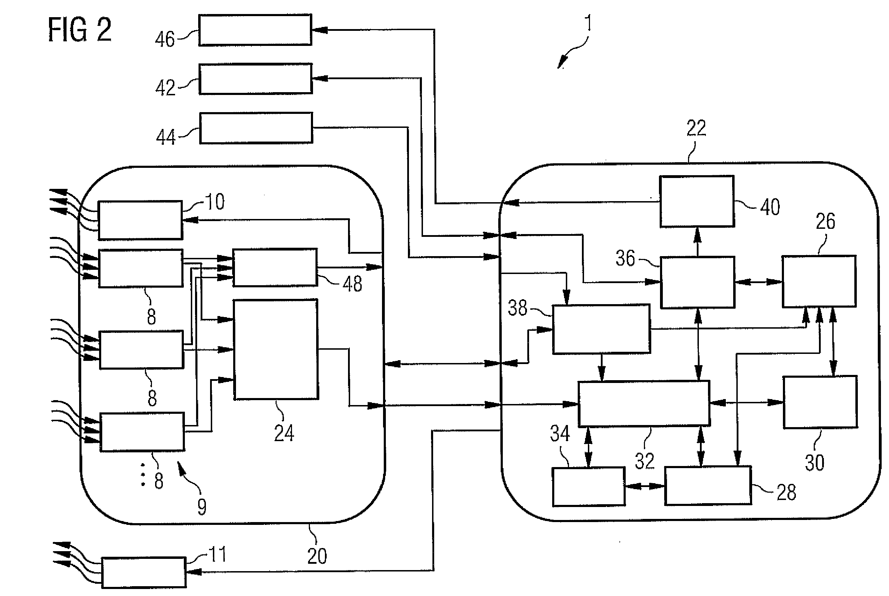

Das Blockschaltbild gemäß Fig. 2 zeigt die wesentlichen Komponenten des Sensorchips 1, wobei die dargestellte Trennung lediglich die funktionelle, nicht jedoch eine strukturelle Trennung des Ausführungsbeispiels dokumentieren soll.

Funktionell ist im Sensorchip 1 zwischen Detektor 20 und integrierter Schaltung 22 zu unterscheiden. Der Detektor 20 umfasst die Fotodioden 8, von denen lediglich drei schematisch dargestellt sind, den Lichtsender 10 sowie eine Signaldigitalisierung 24. Letztere umfasst üblicherweise einen Transimpedanzwandler (nicht dargestellt) zur Wandlung des Fotostroms in eine niederohmig messbare Spannung sowie einen dem Transimpedanzwandler folgenden A/D-Wandler (nicht dargestellt). Damit ist eine ausreichend schnelle Messung mit hoher Grenzfrequenz und eine hohe Linearität im Beleuchtungsfeld der Fotodioden, dem funktionellen Zusammenhang zwischen der Beleuchtung und dem Diodenstrom, erzielbar.

Die integrierte Schaltung 22 umfasst Komponenten der Steuerelektronik, die der Signalkonditionierung für auszusendende Signale dient, Komponenten der Auswerteelektronik zur Signalverarbeitung und Signalauswertung für empfangene Signale, Komponenten der internen Spannungsversorgung sowie der externen Kommunikation, zu denen auch ein Signalgenerator zu rechnen ist, mit welchem ein Ausgangssignal zur Steuerung eines externen elektrischen Geräts generiert wir.

Zur Steuerelektronik gehört eine Signalkonditionierung 26, mit der in Verbindung mit einer Taktung 28 Zeitpunkt sowie Länge und/oder Intensität eines Lichtpulses gesteuert wird. In Verbindung mit einem nichtflüchtigen Speicher 30, in welchem eine Programmierung für den Verfahrensablauf, charakteristische Signal- und Messwerte, Auswerteroutinen und weitere für die Durchführung des Steuerungsverfahrens benötigte Daten dauerhaft und konfigurierbar hinterlegt werden, dienen diese Komponenten der Ansteuerung des Lichtsenders oder gegebenenfalls einer Mehrzahl davon.

Die Auswerteelektronik umfasst einen Prozessor 32 zur Signalauswertung in Verbindung mit einem flüchtigen Speicher 34 und greift zum Zweck der Signalauswertung auf die Taktung 28 sowie den nichtflüchtigen Speicher 30 zurück.

Sowohl die Auswerteelektronik, hier insbesondere der Prozessor 32, als auch die Signalkonditionierung 26 sind über eine Interface 36, das der externen Kommunikation dient, von außen über eine entsprechende Routung innerhalb des Sensorchips 1 und Belegung dessen elektrischer Anschlüsse 6 ansprechbar und programmierbar, um die Signalsendung und Signalauswertung an den jeweiligen Einsatzzweck des Sensorchips 1 anzupassen. Über das Interface 36 ist auch ein Zugriff auf den Detektor 20 realisierbar.

Die Integrierte Schaltung 22 umfasst des Weiteren eine interne Spannungsversorgung 38, die insbesondere der Spannungsversorgung für den Prozessor 32, für die Signalkonditionierung 26 und den Detektor 20 dient. Diese ist optional in umgekehrter Richtung auch mit dem Detektor 20 verbunden, dessen Diodenanordnung 9 mit Kondensatoren 48 (schematisch nur einer dargestellt) verbunden ist. Letztere dienen der Energiespeicherung durch Aufladung über die Diodenanordnung während des Ruhezustands der Steuerungsvorrichtung. Einer der Kondensatoren 48 wird zu Beginn eines Steuerungsverfahrens jedoch auch verwendet, um die Umgebungshelligkeit als optische Grundlast wie unten näher beschrieben zu ermitteln.

Zur Bereitstellung des auf das zu steuernde externe elektrisch Gerät 46, regelmäßig ein Verbraucher abgestimmten Ausgangssignals weist die integrierte Schaltung 22 als Signalgenerator 40 einen Mikroprozessor auf, vorzugsweise eine Digitalen Signalprozessor (DSP). Letzterer bietet die Möglichkeit der vorrangig softwaremäßigen Anpassung des Ausgangssignals an die Steuerung eines externen elektrischen Geräts 46.

Der Sensorchip 1 ist über eine Datenkommunikation 42, welcher der Eingabe und Übermittlung von Daten dient, und über die Systemversorgung 44 zur Spannungsversorgung des Sensorchips 1 mit dem Gesamtsystem z.B. dem eines Fahrzeugs verbunden.

Die beschriebenen Komponenten des Sensorchips 1 dienen entsprechend verschiedener im nichtflüchtigen Speicher hinterlegter Konfigurationen nacheinander unterschiedlichen Funktionsblöcken. So erfolgt im Verlaufe eines nachfolgend näher beschriebenen Steuerungsverfahrens zunächst eine Entfernungsmessung mittels Pulsmessverfahren unter Verwendung des Lichtpulse abstrahlenden Lichtsenders 10, einer wählbaren Anordnung der im Ausführungsbeispiel acht mal acht Fotodioden 8, der Signaldigitalisierung 24 und der integrierten Schaltung 22. Der hier angesprochene Funktionsblock soll nachfolgend als Entfernungsblock bezeichnet sein.

Nach der Entfernungsmessung kann in Abhängigkeit von der Ausgestaltung des Steuerungsverfahrens eine örtlich und zeitlich selektierte Bewegungsdetektion unter Verwendung eine so genannten Bewegungsblocks erfolgen. Dieser Funktionsblock umfasst eine konfigurierbare Diodenanordnung 9 und gleichermaßen die Signaldigitalisierung 24 sowie die integrierte Schaltung 22, hier jedoch mit einer entsprechend angepassten Signalauswertung. Ein Lichtsender 10, der zuvor der Entfernungsmessung diente, wird in der Bewegungsdetektion nicht verwendet.

Optional wird für den Fall, in dem die Umgebungshelligkeit einen solchen Wert unterschreitet, der im nichtlinearen Bereich des Beleuchtungsfeldes der verwendeten Fotodioden 8 liegt, mittels einer Lichtquelle 11 die optische Grundlast während des Detektionsvorganges erhöht. Die Lichtquelle 11 kann separat, aber mit dem Sensorchips 1 gekoppelt oder auf diesem ausgebildet sein.

Zahl und Lage der jeweils verwendeten und dementsprechend aktivierten Fotodioden 8 hängen für beide Funktionsblöcke im Wesentlichen von der Größe und der Lage des abzudeckenden Raumausschnitts ab. Ist zum Beispiel der gesamte Überwachungsraum 50 (Fig. 3) abzudecken, kann eine größere Anzahl von Fotodioden 8 erforderlich sein, als bei Messungen nur im Detektionsbereich 54. Ist der abzudeckende Raumausschnitt in verschiedenen Richtungen unterschiedlich ausgedehnt, können auch nur einzelne Reihen der Diodenanordnung 9 aktiviert sein. Dementsprechend können für Messungen im Vorwarnbereich 52 andere Anordnungen von aktivierten Fotodioden verwendet werden als für Messungen im Detektionsbereich 54 oder im gesamten Überwachungsraum 50.

Mittels Speicherung kann der Wechsel der Aktivierung auch innerhalb eines Steuerungsverfahrens selbst für unmittelbar aufeinanderfolgende Messungen oder Detektionen erfolgen.

Für die Beschaltung des Detektors 20 als Bewegungsblock ist darüber hinaus auch die Verwendung einzelner Fotodioden 8 oder einer Reihe davon für die Detektion bestimmter Bewegungsabläufe möglich, um damit auszuschließen, dass diese nicht unbeabsichtigt zu einer Steuerung des externen elektrischen Geräts 46 führen.

Vergleichbar zur frei wählbaren Aktivierung von Fotodioden 8 für verschiedene Anwendungsfälle können auch eine oder mehr Lichtsender 10 angeordnet sein, die gemeinsam oder separat angesteuert werden, entsprechend ihrer Leistungsparameter, der gewünschten Wellenlänge oder der durchzuführenden Messung bzw. Detektion. In Fig. 2 ist der besseren Übersicht halber und nicht beschränkend lediglich ein Lichtsender 10 dargestellt.

Ab. Fig. 3 stellt zur Verdeutlichung beispielhaft die Lage des Überwachungsraumes 54 im Verhältnis zur Lage des Sensorchips 1 dar. Der Raum, der den Sensorchip 1 unmittelbar umgibt, ist der Detektionsbereich 54. Er ist so dimensioniert, dass darin ein Bewegungsablauf eindeutig ausführbar, detektierbar und identifizierbar ist, um anhand dessen eine Steuerung mit einem nachfolgend beschriebenen Verfahren auszuführen. Er muss aber so klein gewählt werden, dass zu erwartende vergleichbare Bewegungsabläufe, die keine Steuerung initialisieren sollen, ausgeschlossen werden können. Am Beispiel der Türöffnung eines Fahrzeugs ist z.B. sicherzustellen, dass vorbeilaufende Passanten nicht unbeabsichtigt die Steuerung auslösen.

An den Detektionsbereich 54 schließt sich der Vorwarnbereich 52 an, der so dimensioniert ist, dass ausreichend Zeit zur Verfügung steht, um Verifizierungen von Events und Aktivierung bzw. Deaktivierung verschiedener Betriebszustände vorzunehmen. Beide Bereiche 52, 54 gemeinsam bilden den Überwachungsraum 50, hier dargestellt durch die äußere Linie. In Abhängigkeit von den zu erwartenden Events können beide Bereiche 52, 54 auch anders zueinander oder zum Sensorchip 1 liegen. Auch eine abschnittsweise Berührung oder eine vollständige Trennung beider Bereiche 52, 54 ist möglich.

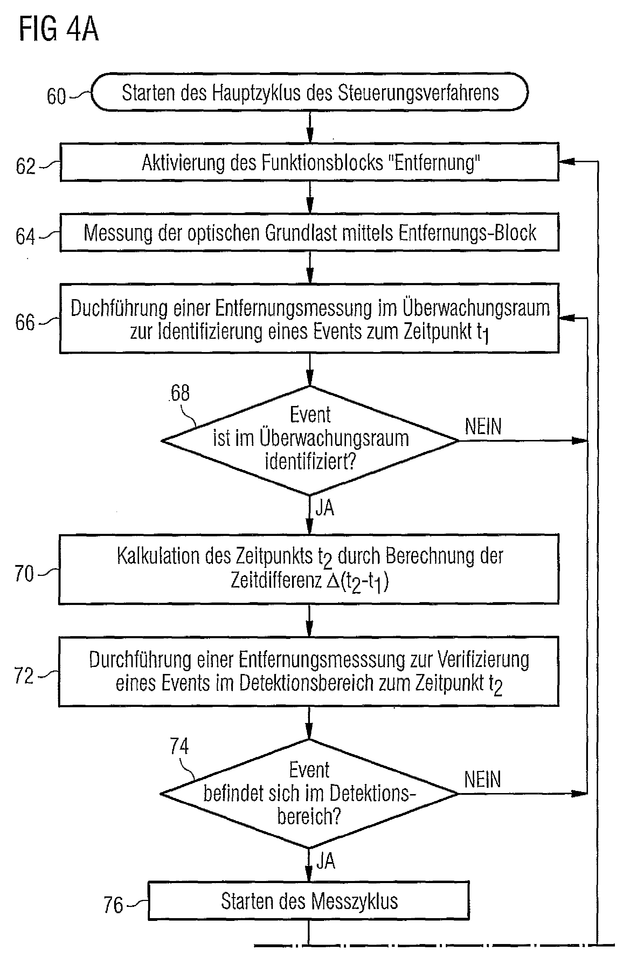

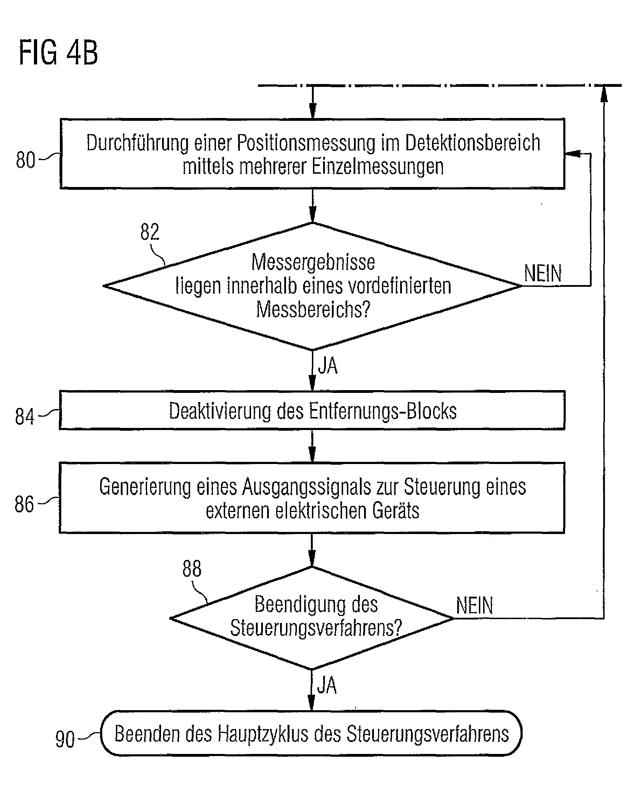

Ein mittels der zuvor beschriebenen Steuerungsvorrichtung ausführbares Steuerungsverfahren ist im Programmablaufplan gemäß Fig. 4A in Verbindung mit Fig. 4B dargestellt Das Steuerungsverfahren wird begonnen durch Start seines Hauptzyklus 60. Dieser versetzt das Entfernungsmesssystem von einem Ruhezustand in den Bereitschaftszustand indem der Funktionsblock "Entfernung" des Sensorchips 1 entsprechend seiner gespeicherten Konfiguration aktiviert 62 wird. Es ist keine Datenkommunikation 42 mit dem Gesamtsystem erforderlich, da der gesamte nachfolgende Verfahrensablauf im Sensorchip 1 gespeichert ist. Je nach Ausgestaltung des Sensorchips 1 erfolgt die Spannungsversorgung entweder vollständig über die Systemversorgung 44 oder zumindest für die ersten Entfernungsmessungen über die Entladung von Kondensatoren 48 des Sensorchips 1. In einer Ausführungsform des Verfahrens liegt die Stromaufnahme im Ruhezustand im Bereich von wenigen hundert Mikroampere.

Soll das Steuerungsverfahren beispielsweise die Öffnung eines verschlossenen Fahrzeugs betreffen, kann der Hauptzyklus verschieden ausgestaltet sein. Im einfachsten Fall wird der Hauptzyklus bereits mit dem Verschließen des Fahrzeugs gestartet werden, so dass bereits zu diesem Zeitpunkt die Bereitschaft der Steuerungsvorrichtung für das erneute Öffnen hergestellt ist. Eine energieeffizientere Variante kann die Erfassung des mit einem Transponder ausgestatteten Fahrzeugschlüssels im Bereich des zugehörigen Senders für den Start nutzen.

Eine erste Entfernungsmessung erfolgt mit dem Funktionsblock "Entfernung", der nachfolgend kurz als Entfernungs-Block bezeichnet wird, zur Ermittlung der optischen Grundlast 64. Dazu wird mittels eines Lichtsenders 10 ein Lichtpuls, z.B. von einer Länge von ca. 10 ns ausgesendet. Der Lichtpuls dient hier lediglich der zeitlichen Steuerung eines Messfensters, im Verlaufe dessen ein Kondensator 48 durch die von zumindest einer der Fotodioden 8 empfangenen Hintergrundstrahlung aufgeladen wird. Nach Ablauf des Messfensters wird die Kondensatorladung unterbrochen und die durch die Hintergrundstrahlung erzeugte optische Grundlast wird aus der Kondensatorspannung ermittelt. Unabhängig von dem weiteren Verfahrensablauf wird die optische Grundlast in vordefinierten Zeitintervallen erneut gemessen, um deren Änderung bei der Entfernungs- und Bewegungsdetektion zu berücksichtigen.

Danach erfolgt eine erste Entfernungsmessung 66 mittels des Entfernungs-Blocks, welche der Identifizierung eines Events, d.h. dem Vorhandensein eines Objekts im Überwachungsraum 50 dient. Dies erfolgt ebenfalls durch die Aussendung eines Lichtpulses, dem Identifizierungsping, der beispielsweise eine Länge von 5 bis 8 ns aufweisen kann, und dem Empfang von reflektierter Strahlung mittels der Fotodioden 8, sofern sich ein Objekt im Überwachungsraum 50 befindet.

Über die zeitliche Bemessung eines Messfensters, d.h. dessen Beginn und Ende in Bezug auf die Aussendung des Identifizierungspings, in welchem die Fotodioden 8 aktiv sind, ist selektierbar, ob sich das Objekt im Überwachungsraum 50, im Vorwarnbereich 52 oder im Detektionsbereich 54 befindet. Start, Länge und Ende des Messfensters sind dafür auf die für jeden Bereich unterschiedlichen Laufzeiten des reflektierten Pulses abgestimmt. So können mit einem Identifizierungsping durch Definition von unterschiedlichen Messfenstern für verschiedene Fotodioden 8 der Diodenanordnung 9 die verschiedenen Bereiche überwacht werden. Diese erste Messung dient lediglich der Identifizierung eines Events und wird nachfolgend zur besseren Unterscheidung als Indentifizierungsmessung bezeichnet. Wird mit der Identifizierungsmessung kein Event festgestellt, wird sie in regelmäßigen, vordefinierten Abständen wiederholt bis die Messung positiv ist. Der Zeitpunkt einer positiven Identifizierungsmessung wird als t₁ vermerkt.

Anhand der Abmessungen von Vorwarnbereich 52 und Detektionsbereich 54 und der durchschnittlichen Geschwindigkeit eines erwarteten Events wird eine Zeitdifferenz Δ(t₂-t₁) und daraus der Zeitpunkt t₂ ermittelt 70, zu dem sich das Event mit Sicherheit im Detektionsbereich 54 befindet. Dieser Kalkulation des Zeitpunkts t₂ liegt zunächst zugrunde, dass ein bestimmtes Event die Steuerung des elektrischen Gerätes auslösen soll, z.B. ein Mensch, der an ein Fahrzeug herantritt. Damit lässt sich die durchschnittliche Geschwindigkeit relativ genau eingrenzen, entweder durch allgemeine Standardwerte oder durch statistisch ausgewertete Messungen. Für den hier genannten Fall hat sich die Durchschnittsgeschwindigkeit von 1 m/s anhand von Versuchen als zutreffend herausgestellt.

Des Weiteren liegt der Kalkulation zugrunde, dass sich das Event bei dieser Durchschnittsgeschwindigkeit mit Sicherheit noch im Detektionsbereich 54 befindet und zwar sowohl für den Fall, dass es zunächst im Vorwarnbereich 52 identifiziert wurde, als auch für den Fall der Identifizierung im Detektionsbereich 54. Auf den oben genannten Anwendungsfall bezogen, ist z.B. zu berücksichtigen, dass sich vorbeibewegende andere Verkehrsteilnehmer mit einer anderen Geschwindigkeit bewegen und sich diese nicht infolge des Herantretens verlangsamen wird.

In vergleichbarer Weise sind für die verschiedenen, im jeweiligen Anwendungsfall zu erwartenden Situationen Randbedingungen festzustellen, die eine Verifikation eines zuvor identifizierten Events als für die Steuerung mit hoher Sicherheit relevant zulassen. Von Bedeutung ist jedoch, dass das Event im Detektionsbereich 54 verifiziert wird, da dies als Voraussetzung für die spätere Steuerung des externen elektrischen Gerätes 46 festgelegt ist.

Die Verifizierung erfolgt mit einer weiteren Entfernungsmessung vergleichbar der Identifizierungsmessung mit einem Lichtpuls vergleichbarer Länge, dem Verifizierungsping, jedoch zum Zeitpunkt t₂ 72. Hier ist die Lage und Bemessung des oder der Messfenster in Bezug auf den Verifizierungsping so vorzunehmen, dass das Event zweifelsfrei im Detektionsraum lokalisiert 74 wird. Ist die Verifizierungsmessung negativ, d.h. das Event befindet sich nicht im Detektionsbereich 54, was auch eine Entfernung des Objekts aus dem Überwachungsraum 50 einschließt, dann wird die vorangegangene Identifizierungsmessung zum Zeitpunkt t₁ verworfen und die Schleife bis zur positiven Identifizierungsmessung beginnt erneut bis auch die Verifizierungsmessung positiv ist.

Erst wenn dies der Fall ist, wird der Betriebszustand mit dem eigentlichen Messzyklus des Steuerungsverfahrens gestartet 76. Dieser Systemzustand unterscheidet sich von dem vorangegangenen Bereitschaftszustand dadurch, dass erst jetzt die für das Steuerungsverfahren notwendige Stromversorgung in voller Höhe anliegt. Der Systemzustand während der Identifizierungs- und Verifizierungsmessungen stellt im Vergleich dazu eher einen Sleep-Modus dar, dessen Leistungsaufnahme in solch einer Höhe begrenzt sein soll, dass entsprechend einer Ausgestaltung des Verfahrens die Stromversorgung allein oder zumindest zu einem überwiegenden Teil aus der Speicherung des Diodenstroms möglich ist, der über die im Ruhezustand des Systems als Solarzelle genutzte Diodenanordnung 9 erzielt werden kann. In einem Ausführungsbeispiel ist die Stromaufnahme im Bereitschaftszustand auf maximal 20 mA begrenzt.

Der weitere Verfahrensablauf ist Fig. 4B dargestellt. Während des Messzyklus erfolgt eine hier als Positionsmessung bezeichnete Messung 80, die sich aus mehreren Einzelmessungen des Pulsmessverfahrens zusammensetzt. Dazu werden innerhalb eines Erlaubniszeitraums in gleichmäßigen Abständen mehrere Lichtpulse mittels Lichtsender 10 ausgesendet. Der Erlaubniszeitraum ist wiederum entsprechend der obigen Überlegungen zu den erwarteten Events zu dimensionieren. Im obigen Anwendungsbeispiel beträgt dieser ca. 5 ms. Innerhalb dieser Zeit werden fünf Lichtpulse ausgesendet, die in vorteilhafter Weise, aber nicht zwingend die gleiche Pulsbreite, z.B. 5-8 ns, und die gleiche Pulshöhe aufweisen.

Die Ermittlung der Position des Events erfolgt über die Messung und Auswertung der Pulsbreite und/oder Pulshöhe der am Event reflektierten Strahlung. Durch statisch gesicherte Messung, Simulation oder Berechnung sind die zu erwartenden Messwerte zu ermitteln, in Abhängigkeit davon, ob sich das Event innerhalb des Detektionsbereichs 54 befindet oder nicht. Zur Sicherung des Messergebnisses wird die Positionsmessung nur dann als positiv bewertet, d.h. das Event befindet sich im Detektionsbereich 54 zum Zweck der Steuerung des externen elektrischen Geräts 46, wenn von den Einzelmessungen der überwiegende Teil, im obigen Beispiel von den fünf Lichtpulsen unter Berücksichtigung der zuletzt ermittelten optischen Grundlast zumindest drei innerhalb eines - oder mehrerer - Bereichs 82 vordefinierter Pulsbreite und/oder Pulshöhe liegen. Ist diese Bedingung nicht erfüllt, d.h. ist die Positionsmessung negativ, wird sie wiederholt.

Die vordefinierten Messwerte sind im nichtflüchtigen Speicher 30 des Sensorchips 1 hinterlegt und können über die Datenkommunikation 42 dem jeweiligen Anwendungsfall des im Gesamtsystem integrierten Sensorchips 1 angepasst werden.

Ist die Positionsmessung positiv, wird der Entfernungs-Block deaktiviert 84. Erst darauf beginnt die eigentliche Steuerung des externen elektrischen Geräts 46. In der Ausführungsform gemäß Fig. 4B erfolgt nun die Generierung eines auswertbaren, analogen Ausgangssignals 86 mittels eines geeigneten Signalgenerators und der Übertragung des Ausgangssignals an das externe elektrische Gerät 46. Damit kann entweder 88 das Steuerungsverfahren beendet werden, was z.B. bei der Öffnung einer Fahrzeugtür der Fall wäre, oder das Verfahren verbleibt im Hauptzyklus und startet im Bereitschaftszustand erneut mit der Aktivierung des Entfernungs-Blocks und einer Identifizierungsmessung. Letzteres ist dann der Fall, wenn wiederholende oder andere Steuerungsverfahren mithilfe desselben Sensorchips 1 durchzuführen sind. Ist dies nicht der Fall, wird der Hauptzyklus beendet 90, womit der Sensorchip 1 in seinen Ruhezustand versetzt wird.

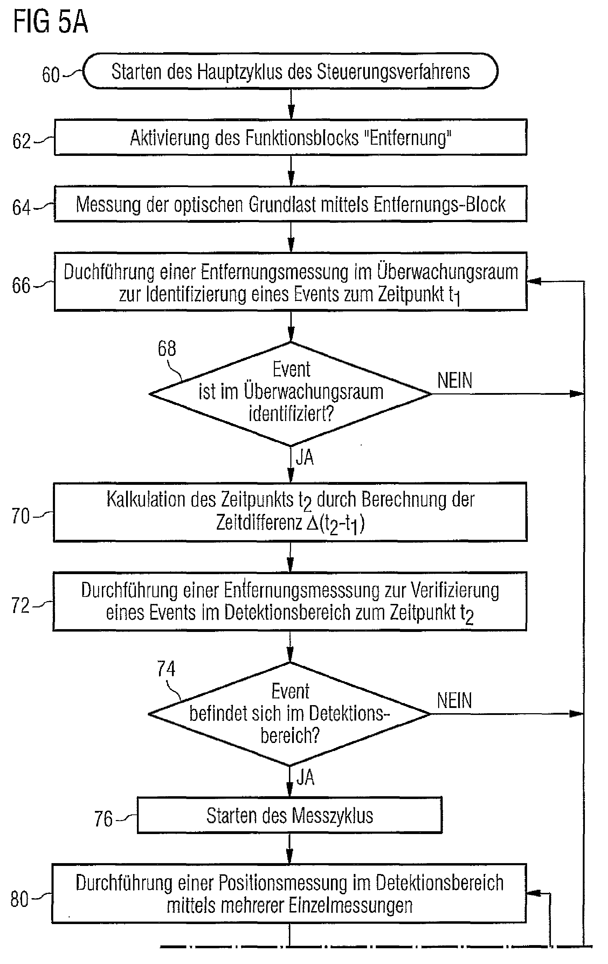

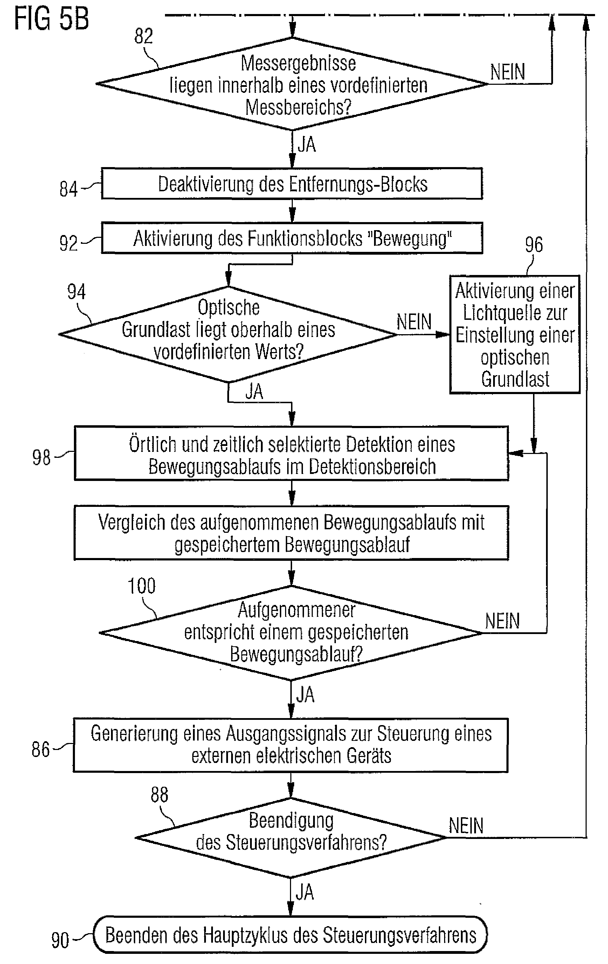

Eine Ausgestaltung des zuvor beschriebenen Verfahrens soll beispielhaft an der Steuerung zur Öffnung einer Fahrzeugtür anhand Fig. 5A in Verbindung mit Fig. 5B beschrieben werden, wobei Fig. 5B die Fortsetzung des in Fig. 5A beschriebenen und nicht abgeschlossenen Ablaufs zeigt. In vergleichbarer Weise ist auch dieses Verfahren auf die Steuerung anderer elektrischer Geräte auch in anderen als den Fahrzeugassistenzsystemen anwendbar.

Zunächst erfolgen die ersten Verfahrensschritte bis zur Deaktivierung des Entfernungs-Blocks 84 wie oben zu Fig. 4A, Fig. 4B beschreiben. Insoweit wird auf die obigen Darlegungen verwiesen und stimmen die Bezeichnungen der einzelnen Verfahrensschritte in den Fig. 4A, Fig. 4B und Fig. 5A, Fig. 5B überein.

Das Steuerungsverfahren gemäß Fig. 5A und Fig. 5B unterscheidet sich im Wesentlichen von dem in Fig. 4A, Fig. 4B dadurch, dass zumindest eine weitere Detektion Voraussetzung ist für die Signalgenerierung, um so verschiedene Optionen für die Signalgenerierung bereitzustellen. Dies können beispielsweise eine weitere Selektierung der verifizierten und positionsbestimmten Events sein oder die Möglichkeit, die Art des Ausgangssignals mit der zusätzlichen Detektion zu verknüpfen.

Zu diesem Zweck wird nach der positiv abgeschlossenen Positionsmessung der Funktionsblock "Entfernung" wie zu Fig. 4B beschreiben deaktiviert 84. Auf diese Weise kann die Leistungsaufnahme des Sensorchips 1 weiter vermindert und die Komponenten des Sensorchips 1, die zuvor für den Entfernungs-Block verwendet wurden, nunmehr für die nächste Funktion konfiguriert und verwendet werden.

Durch die Aktivierung des nächsten Detektions-Blocks 92, der im nachfolgend beschriebenen Ausführungsbeispiel der örtlich und zeitlich aufgelösten Bewegungsdetektion dient und deshalb Bewegungs-Block genannt wird, erfolgt die Konfiguration des Sensorchips 1, d.h. die Aktivierung und Verknüpfung der einzelnen Komponenten des Sensorchips 1 entsprechend der neuen Aufgabenstellung. Die Konfiguration des Bewegungs-Blocks ist wie auch die Konfiguration des Entfernungs-Blocks im nichtflüchtigen Speicher 30 des Sensorchips 1 hinterlegt.

Die Bewegungsdetektion erfolgt im Unterschied zur Entfernungsmessung auf der Grundlage der Ermittlung der Änderung der Helligkeitswerte infolge des sich im Detektionsraum 54 bewegenden Events, d.h. die Detektion erfolgt grundsätzlich passiv und wird deutlich mehr durch die Umgebungshelligkeit beeinflusst.

Um auch für eine geringe Umgebungshelligkeit den linearen Bereich des Beleuchtungsfeldes der Fotodioden 8 des Sensorchips 1 nutzen zu können, wird zunächst die eingangs des Verfahrens ermittelte optische Grundlast mit einem gespeicherten Mindestwert verglichen 94, der im Wesentlichen von der Diodenkennlinie und der Auswerteelektronik bestimmt wird. Liegt die optische Grundlast unterhalb eines vordefinierten Wertes, wird die optische Grundlast mittels einer Lichtquelle 11 auf den Mindestwert oder darüber angehoben 96. Dies erfolgt entweder dauerhaft oder zumindest während der Zeit, in welcher die Bewegungsdetektion mittels Bewegungs-Block erfolgt. Die Lichtquelle 11 kann mit dem Sensorchips 1 gekoppelt oder auf diesem ausgebildet sein, wodurch eine direkte Kopplung an den Detektionsvorgang möglich ist, sowohl zeitlich als auch bezüglich der Intensität. Als vorteilhaft hat sich für diesen Fall die Verwendung einer Infrarot-LED erwiesen, auch aufgrund der geringen Leistungsaufnahme.

Liegt die optische Grundlast aufgrund der zusätzlichen Lichtquelle 11 oder aufgrund der ausreichenden Umgebungshelligkeit oberhalb dieses vordefinierten Wertes, kann die örtlich und zeitlich selektierte Bewegungsdetektion erfolgen 98.

Der Bewegungsablauf kann entweder als Verteilungscharakteristik der Fotodiodenströme detektiert werden, welche durch die räumlich unterschiedlichen Helligkeitswerte in Abhängigkeit von der Lage des Events relativ zur Diodenanordnung 9 und damit im Detektionsraums am Ende der Bewegung bestimmt ist. Diese Charakteristik stellt gewissermaßen einen Fingerabdruck für den detektierten Bewegungsablauf dar, da verschiedene Abläufe am Ende zu deutlich unterscheidbaren Lagen des Events relativ zum Sensorchip 1 führen. Alternativ kann auch die zeitliche Auflösung mittels der Diodenanordnung 9 genutzt werden, sofern solche Fotodioden 8 verwendet werden, deren Empfindlichkeit und Schnelligkeit so hoch ist, dass irgendeine Bewegung sich zeitlich auflösbar in räumlich unterschiedlichen Diodenströmen zeigt. Hierfür sind z.B. Avalanche-Fotodioden verwendbar.

Ein so detektierter örtlich und zeitlich aufgelöster Bewegungsablauf wird nachfolgend mittels der Auswerteelektronik mit Bewegungsabläufen verglichen 100, die im nichtflüchtigen Speicher 30 des Sensorchips 1 als jene Abläufe gespeichert sind, welche für das weitere Steuerungsverfahren relevant sind. Dies sind zum einen diese Abläufe, die die Steuerung des externen elektrischen Geräts auslösen sollen, im obigen Beispiel eine Fahrzeugsystems ein Kick mit dem Fuß beim Herantreten an eine Fahrzeugheckklappe oder ein Winken mit einer Hand vor einer Fahrzeugtür zu deren Öffnung.

Andererseits sind jedoch auch Bewegungsabläufe zu hinterlegen, die häufig auftreten und für die sicherzustellen ist, dass diese nicht zufällig zu einer Fehlfunktion führen können. Dies können z.B. im Überwachungsraum verweilende oder sich langsam bewegende Passanten, Bewegungen von Bewuchs am Fahrbahnrand oder Bewegungen in einer Waschanlage sein. Diese auszuschließenden Bewegungsabläufe können wie beschrieben anhand des softwaremäßigen Vergleichs 100 allein durch die Auswerteelektronik selektiert werden oder alternativ auch parallel und real mit einem Teil der Diodenanordnung 9 ausgeführt werden, der für die primäre, der Gerätesteuerung nicht verwendet wird. Hierfür ist die Diodenanordnung 9 mittels der Steuerelektronik entsprechend anzusteuern.

Für diese Ausgestaltung des Verfahrens können von der oben beschriebenen Diodenanordnung 9 mit acht mal acht Fotodioden 8 beispielsweise zwei senkrechte Reihen für die primäre Bewegungsdetektion und eine waagerechte Reihe für die letztgenannte Ausschlussdetektion verwendet werden. Von den übrigen Fotodioden 8 sind eine oder mehr z.B. für die Ermittlung der optischen Grundlast auch während der Detektion der Bewegungsabläufe verwendbar. Alternativ sind auch die gesamte Diodenanordnung 9 und nacheinander für die verschiedenen Aufgaben einsetzbar. Diese Aufteilungen sollen lediglich beispielhaft auf die Vielzahl Möglichkeiten hinweisen, nicht jedoch beschränkend aufzufassen sein.

Ergibt der Vergleich des örtlich und zeitlich detektierten Bewegungsablaufs keine Übereinstimmung mit einem gespeicherten Ablauf, wird die Bewegungsdetektion wiederholt, bis der der Vergleich positiv ausfällt. Erst dann wird das für die Steuerung des externen elektrischen Gerätes 46 erforderliche Ausgangssignal im Signalgenerator des Sensorchips 1 generiert 86 und über die Datenkommunikation 42 wie oben beschrieben an das externe elektrische Gerät 46 übertragen.

Wie oben zu Fig. 4A, Fig. 4B beschrieben besteht nunmehr die Option, den Hauptzyklus zu beenden 90 oder erneut zu durchlaufen. Zu diesen Optionen wird auf die obigen Darlegungen verwiesen.

Mit dem Steuerungsverfahren gemäß Fig. 5A und Fig. 5B ist es möglich, die Leistungsaufnahme über das gesamte Verfahren und über einen Temperaturbereich von -40°C bis 85°C unterhalb des Wertes von 0,5 W zu halten. Die oben beschriebene Steuerungsvorrichtung selbst hält im Betrieb dem genanten Temperaturbereich stand, in der Lagerung wird dieser Bereich noch überschritten.

## Patentansprüche

1. Verfahren zur Steuerung von elektrischen Geräten (46) mittels dreidimensionaler Bewegungsdetektion von Objekten in einem Überwachungsraum (50) welcher in einen Detektionsbereich (54) und einen sich daran anschließenden Vorwarnbereich (52) unterteilt ist, mittels eines ein Entfernungsmesssystem und ein Steuerungssystem umfassenden Detektionssystems, folgende Verfahrensschritte umfassend:
- Starten des Hauptzyklus des Steuerungsverfahrens (60) durch Versetzen der Steuerungsvorrichtung von einem Ruhe- in einen Bereitschaftszustand, wenn die Anwesenheit eines Events, nachfolgend als Event bezeichnet, erwartet wird, wobei im Bereitschaftszustand lediglich Einzelmessungen durchgeführt werden,
- Durchführung einer Entfernungsmessung (66) zum Event mittels der in Bereitschaftszustand befindlichen Steuerungsvorrichtung zum Zeitpunkt t₁ zur Identifizierung des erwarteten Events als innerhalb des Vorwarnbereichs (52) oder innerhalb des Detektionsbereichs befindlich;
- Durchführung einer weiteren Entfernungsmessung (72) mittels der in Bereitschaftszustand befindlichen Steuerungsvorrichtung zur Verifizierung eines mit besagter Identifizierungsmessung festgestellten Events als im Detektionsbereich (54) befindlich zu einem Zeitpunkt t₂;
- wobei die Entfernungsmessungen (66, 72) mittels gepulsten Lichts erfolgt und zur Identifizierungsmessung und/oder zur Verifizierungsmessung jeweils nur ein Lichtpuls, nachfolgend als Identifizierungsping bzw. Verifizierungsping bezeichnet, verwendet wird,
- Starten des Messzyklus (76) des Steuerungsverfahrens durch Versetzen der Steuerungsvorrichtung in einen Betriebszustand, wenn sich ein mit besagter Verifizierungsmessung festgestelltes Event im Detektionsbereich (54) befindet,
- wobei der Betriebszustand durch eine höhere Leistungsaufnahme als im Bereitschaftszustand und dieser wiederum durch eine höhere Leistungsaufnahme als im Ruhezustand gekennzeichnet ist und nur im Betriebszustand die für das Steuerungsverfahren notwendige Stromversorgung in voller Höhe anliegt,
- Durchführung eines Messzyklus zur Ermittlung der Position, nachfolgend als Positionsmessung (80) bezeichnet, des innerhalb des Detektionsbereichs (54) verifizierten Events,
- Starten der Steuerung eines elektrischen Geräts (46), wenn die Positionsmessung vordefinierte Bedingungen erfüllt, indem ein Ausgangssignal generiert wird (86), welches der Steuerung des elektrischen Geräts (46) dient und
- anschließend Beendigung des Hauptzyklus des Steuerungsverfahrens (90) und Versetzen der Steuerungsvorrichtung in ihren Ruhezustand.

2. Verfahren zur Steuerung von elektrischen Geräten (46) nach Anspruch 1, wobei die Zeitdifferenz Δ(t₂-t₁) bis zur Verifizierungsmessung kalkuliert wird (70), indem ab dem Zeitpunkt t₁ ein wahrscheinlicher Zeitpunkt t₂ ermittelt wird, zu dem ein Event in Abhängigkeit von seiner durchschnittlichen Geschwindigkeit und von der Länge eines möglichen Weges innerhalb des Überwachungsraums (50) im Detektionsbereich (54) anzutreffen ist.

3. Verfahren zur Steuerung von elektrischen Geräten (46) nach einem der vorstehenden Ansprüche, wobei die Positionsmessung (80) mittels mehrerer Einzelmessungen mit je einem Lichtpuls innerhalb eines vordefinierten Erlaubniszeitraums erfolgt und die Generierung eines Ausgangssignals (86) nur dann gestartet wird, wenn eine vordefinierte Anzahl der Messergebnisse der Einzelmessungen innerhalb vordefinierter Messwertbereiche liegt (82).

4. Verfahren zur Steuerung von elektrischen Geräten (46) nach einem der vorstehenden Ansprüche, wobei der Funktionsblock der Steuerungsvorrichtung, welcher der Entfernungsmessung (66, 72) dient und als Entfernungs-Block bezeichnet sein soll, vor der Generierung des Ausgangssignals deaktiviert wird (84).

5. Verfahren zur Steuerung von elektrischen Geräten (46) nach einem der vorgenannten Ansprüche, wobei die Steuervorrichtung einen Funktionsblock zur örtlich und zeitlich selektierten Detektion von Bewegungsabläufen (98) im Detektionsbereich (54) aufweist, nachfolgend als Bewegungs-Block bezeichnet, und das Steuerungsverfahren folgende weitere Verfahrensschritte umfasst:
- örtlich und zeitlich selektierte Detektion eines Bewegungsablaufs (98) des im Detektionsbereich (54) befindlichen Events,
- Generierung eines Ausgangssignals (86), welches von dem zuvor detektierten Bewegungsablauf abhängig ist.

6. Verfahren zur Steuerung von elektrischen Geräten (46) nach Anspruch 5, wobei die örtlich und zeitlich selektierende Detektion von Bewegungsabläufen (98) mittels Sensierung der Änderung der Helligkeitswerte einer Anordnung von Fotodioden infolge des Bewegungsablaufs erfolgt.

7. Verfahren zur Steuerung von elektrischen Geräten (46) nach einem der Ansprüche 5 oder 6, wobei bei einer Umgebungshelligkeit, die einen vordefinierten Wert unterschreitet, mittels einer Lichtquelle (11) zumindest während der Detektion von Bewegungsabläufen eine definierte optische Grundlast eingestellt wird (96).

8. Verfahren zur Steuerung von elektrischen Geräten (46) nach einem der Ansprüche 5 bis 7, wobei der Funktionsblock, der Steuerungsvorrichtung, welcher der Entfernungsmessung (66, 72) dient und als Entfernungs-Block bezeichnet sein soll, vor der örtlich und zeitlich selektierten Detektion von Bewegungsabläufen im Detektionsbereich deaktiviert (84) wird.

9. Verfahren zur Steuerung von elektrischen Geräten (46) nach einem der vorgenannten Ansprüche, wobei die Lichtempfänger der Steuerungsvorrichtung eine Anordnung von Fotodioden (8) ist und diese Diodenanordnung (9) während eines Ruhezustands der Steuerungsvorrichtung zur Speicherung von elektrischer Energie verwendet werden, die ausreicht, um das Steuerungsverfahren zumindest bis zum Starten des Messzyklus (76) durchzuführen.

10. Vorrichtung, die zur Ausführung des Steuerungsverfahrens nach einem der vorstehenden Ansprüche ausgebildet ist, wobei die Steuerungsvorrichtung folgende Komponenten umfasst:
- ein Messsystem zur Entfernungsmessung, als Entfernungs-Block bezeichnet,
- ein Messsystem zur örtlich und zeitlich selektierende Detektion von Bewegungsabläufen, als Bewegungs-Block bezeichnet,
- zumindest einen Lichtsender (10) als Bestandteil des Entfernungs-Blocks zur Abstrahlung von Licht in den Überwachungsraum, wobei der Lichtsender (10) im Pulsbetrieb betreibbar ist,
- eine Anordnung von mehreren, in zumindest zwei Zeilen angeordneten Fotodioden (8) als Lichtempfänger (8) zum Empfang von Strahlung, die infolge von Reflexion an einem, im Überwachungsraum befindlichen Objekt auf den Lichtempfänger (8) trifft, wobei zumindest einige der Lichtempfänger nacheinander entweder dem Entfernungs-Block oder dem Bewegungs-Block zuordenbar sind.
- eine Steuerelektronik zur Ansteuerung des Lichtsenders (10) und der Lichtempfänger (8), so dass der Lichtsender (10) Pulse verschiedener Länge und/oder Intensität und/oder Taktung abstrahlt und dass zumindest einige der Lichtempfänger (8) nacheinander entweder dem Entfernungs-Block oder dem Bewegungs-Block zugeordnet sind,
- eine Auswerteelektronik zur Auswertung von gesendeter und/oder empfangener Strahlung, zur Speicherung von charakteristischen Werten von Lichtpulsen sowie von Verteilungscharakteristiken der Fotodiodenströme, die über die Fläche der Diodenanordnung zeitlich oder flächenmäßig selektiert sind, und zum Vergleich detektierter und gespeicherter optischer Signale sowie Verteilungscharakteristiken und
- einen Signalgenerator (40), mit welchem ein Ausgangssignal zur Steuerung eines externen elektrischen Geräts generierbar ist.

11. Steuerungsvorrichtung nach Anspruch 10, wobei zwei Lichtsender (10) zur Abstrahlung von Licht in unterschiedlichen Wellenlängenbereichen in den Überwachungsraum (50) angeordnet sind und einer davon mit einem Teil besagter Diodenanordnung (9) dem Entfernungs-Block und der andere davon mit einem Teil besagter Diodenanordnung (9) dem Bewegungs-Block zugeordnet sind.

12. Steuerungsvorrichtung nach einem der Ansprüche 10 oder 11, wobei die Länge und/oder die Intensität und/oder die Taktung der Lichtpulse mittels der Steuerelektronik berechenbar und frei einstellbar sind.

13. Steuerungsvorrichtung nach einem der Ansprüche 10 bis 12, des Weiteren eine Lichtquelle (11) zur Einstellung einer definierten optischen Grundlast umfassend.

14. Steuerungsvorrichtung nach einem der Ansprüche 10 bis 13, des Weiteren Kondensatoren (48) umfassend, die mittels Fotostrom besagter Diodenanordnung (9) zur Energiespeicherung in solchem Umfang aufladbar und wieder entladbar sind, dass zumindest eine Entfernungsmessung (66, 72) ausführbar ist.

15. Steuerungsvorrichtung nach einem der Ansprüche 10 bis 14, wobei die Lichtempfänger (8) und der oder die Lichtsender (10) sowie die Steuer-, die Auswerteelektronik und der Signalgenerator (40) monolithisch integriert, d.h. auf einem Halbleiterchip angeordnet sind.

## Claims

1. Method for controlling electrical devices (46) by means of three-dimensional motion detection of objects in a monitoring space (50), which is subdivided into a detection region (54) and an adjoining advance warning region (52), by means of a detection system comprising a distance measurement system and a control system, comprising the following method steps of:
- starting the main cycle of the control method (60) by changing the control apparatus from a quiescent state to a standby state if the presence of an event, referred to as an event below, is expected, only individual measurements being carried out in the standby state,
- carrying out a distance measurement (66) to the event by means of the control apparatus in the standby state at the time t₁ in order to identify the expected event as being inside the advance warning region (52) or inside the detection region;
- carrying out a further distance measurement (72) by means of the control apparatus in the standby state in order to verify an event determined using said identification measurement as being in the detection region (54) at a time t₂;
- the distance measurements (66, 72) being out by means of pulsed light, and only one light pulse, referred to as the identification ping or verification ping below, respectively being used for the identification measurement and/or the verification measurement,
- starting the measurement cycle (76) of the control method by changing the control apparatus to an operating state if an event determined using said verification measurement is in the detection region (54),
- the operating state being **characterized by** a higher power consumption than in the standby state and the latter in turn being **characterized by** a higher power consumption than in the quiescent state and the power supply needed for the control method being fully applied only in the operating state,
- carrying out a measurement cycle in order to determine the position, referred to as a position measurement (80) below, of the event verified as being inside the detection region (54),
- starting the control of an electrical device (46), if the position measurement satisfies predefined conditions, by generating (86) an output signal which is used to control the electrical device (46), and
- subsequently ending the main cycle of the control method (90) and changing the control apparatus to its quiescent state.

2. Method for controlling electrical devices (46) according to Claim 1, the time difference Δ(t₂-t₁) until the verification measurement being calculated (70) by determining, as of the time t₁, a likely time t₂ at which an event can be found in the detection region (54) on the basis of its average speed and the length of a possible path inside the monitoring space (50).

3. Method for controlling electrical devices (46) according to one of the preceding claims, the position measurement (80) being carried out by means of a plurality of individual measurements each with a light pulse within a predefined permission period, and the generation of an output signal (86) being started only when a predefined number of the measurement results of the individual measurements is (82) within predefined measured value ranges.

4. Method for controlling electrical devices (46) according to one of the preceding claims, the function block of the control apparatus which is used for the distance measurement (66, 72) and shall be referred to as a distance block being deactivated (84) before the output signal is generated.

5. Method for controlling electrical devices (46) according to one of the above-mentioned claims, the control apparatus having a function block for the locally and temporally selected detection of motion sequences (98) in the detection region (54), referred to as a motion block below, and the control method comprising the following further method steps:
- locally and temporally selected detection of a motion sequence (98) of the event in the detection region (54),
- generation of an output signal (86) which is dependent on the previously detected motion sequence.

6. Method for controlling electrical devices (46) according to Claim 5, the locally and temporally selective detection of motion sequences (98) being carried out by sensing the change in the brightness values of an arrangement of photodiodes on account of the motion sequence.

7. Method for controlling electrical devices (46) according to either of Claims 5 and 6, a defined optical basic load being set (96) by means of a light source (11) at least during the detection of motion sequences in the event of an ambient brightness which undershoots a predefined value.

8. Method for controlling electrical devices (46) according to one of Claims 5 to 7, the function block of the control apparatus which is used for the distance measurement (66, 72) and shall be referred to as a distance block being deactivated (84) before the locally and temporally selected detection of motion sequences in the detection region.

9. Method for controlling electrical devices (46) according to one of the above-mentioned claims, the light receivers of the control apparatus being an arrangement of photodiodes (8) and this diode arrangement (9) being used, during a quiescent state of the control apparatus, to store electrical energy which suffices to carry out the control method at least until the measurement cycle (76) is started.

10. Apparatus which is designed to carry out the control method according to one of the preceding claims, the control apparatus comprising the following components:
- a measurement system for the distance measurement, referred to as a distance block,
- a measurement system for the locally and temporally selective detection of motion sequences, referred to as a motion block,
- at least one light transmitter (10) as part of the distance block for emitting light into the monitoring space, the light transmitter (10) being able to be operated in pulsed operation,
- an arrangement of a plurality of photodiodes (8) arranged in at least two rows as light receivers (8) for receiving radiation which strikes the light receiver (8) on account of reflection at an object in the monitoring space, at least some of the light receivers being able to be assigned either to the distance block or to the motion block in succession,
- control electronics for controlling the light transmitter (10) and the light receivers (8), with the result that the light transmitter (10) emits pulses of different length and/or intensity and/or clocking, and with the result that at least some of the light receivers (8) are assigned either to the distance block or to the motion block in succession,
- evaluation electronics for evaluating transmitted and/or received radiation, for storing characteristic values of light pulses and distribution characteristics of the photodiode currents which are selected in terms of time or area over the area of the diode arrangement, and for comparing detected and stored optical signals and distribution characteristics, and
- a signal generator (40) which can be used to generate an output signal for controlling an external electrical device.

11. Control apparatus according to Claim 10, two light transmitters (10) for emitting light in different wavelength ranges into the monitoring space (50) being arranged, and one of said light transmitters with a part of said diode arrangement (9) being assigned to the distance block, and the other of said light transmitters with a part of said diode arrangement (9) being assigned to the motion block.

12. Control apparatus according to either of Claims 10 and 11, the length and/or the intensity and/or the clocking of the light pulses being able to be calculated and freely set using the control electronics.

13. Control apparatus according to one of Claims 10 to 12, also comprising a light source (11) for setting a defined optical basic load.

14. Control apparatus according to one of Claims 10 to 13, also comprising capacitors (48) which can be charged and discharged again using photocurrent from said diode arrangement (9) for energy storage to such an extent that at least one distance measurement (66, 72) can be carried out.

15. Control apparatus according to one of Claims 10 to 14, the light receivers (8) and the light transmitter(s) (10) and the control electronics, the evaluation electronics and the signal generator (40) being monolithically integrated, that is to say arranged on a semiconductor chip.

## Revendications

1. Procédé pour la commande d'appareils électriques (46) par détection de mouvement tridimensionnelle d'objets dans un espace de surveillance (50) qui est divisé en une région de détection (54) et une région de pré-alarme (52) se raccordant à celle-ci, au moyen d'un système de détection comprenant un système de mesure de distance et un système de commande, comprenant les étapes de procédé suivantes :
- déclencher le cycle principal du procédé de commande (60) en faisant passer le dispositif de commande d'un état de repos à un état prêt lorsque la présence d'un événement, désigné ci-après événement, est attendue, dans lequel des mesures individuelles ne sont effectuées que dans l'état prêt,
- effectuer une mesure de distance (66) au moment de l'événement au moyen du dispositif de commande se trouvant dans l'état prêt à l'instant t₁ pour identifier l'événement attendu comme se trouvant à l'intérieur de la région de pré-alarme (52) ou à l'intérieur de la région de détection ;
- effectuer une autre mesure de distance (72) au moyen du dispositif de commande se trouvant dans l'état prêt pour vérifier un événement établi par ladite mesure d'identification comme se situant dans la région de détection (54) à un instant t₂ ;
- dans lequel les mesures de distance (66, 72) s'effectuent au moyen d'une lumière pulsée et dans lequel une seule impulsion de lumière, désignée impulsion d'identification ou impulsion de vérification, est respectivement utilisée pour la mesure d'identification et/ou pour la mesure de vérification,
- déclencher le cycle de mesure (76) du procédé de commande en faisant passer le dispositif de commande dans un état de fonctionnement lorsqu'un événement établi par laite mesure de vérification se trouve dans la région de détection (54),
- dans lequel l'état de fonctionnement est **caractérisé par** une consommation d'énergie plus élevée que dans l'état prêt et par le fait que celui-ci est lui-même **caractérisé par** une consommation d'énergie plus élevée qu'à l'état de repos, et qu'à l'état de fonctionnement, l'alimentation en courant nécessaire pour le procédé de commande est appliquée de manière maximale,
- effectuer un cycle de mesure pour déterminer la position, désignée ci-après mesure de position (80), de l'événement vérifié à l'intérieur de la région de détection (54),
- déclencher la commande d'un appareil électrique (46) lorsque la mesure de position remplit des conditions prédéfinies, lors de quoi un signal de sortie qui est utilisé pour commander l'appareil électrique (46) est généré (86), et
- interrompre ensuite le cycle principal du procédé de commande (90) et faire passer le dispositif de commande à l'état de repos.

2. Procédé pour la commande d'appareils électriques (46) selon la revendication 1, dans lequel la différence de temps Δ(t₂-t₁) s'écoulant jusqu'à la mesure de vérification est calculée (70) en déterminant à partir de l'instant t₁ un instant t₂ vraisemblable lors duquel un événement doit se produire en fonction de sa vitesse moyenne et de la longueur d'un trajet possible à l'intérieur de l'espace de surveillance (50) dans la région de détection (54).

3. Procédé pour la commande d'appareils électriques (46) selon l'une quelconque des revendications précédentes, dans lequel la mesure de position (80) est effectuée au moyen de plusieurs mesures individuelles à l'aide de chaque impulsion lumineuse au cours d'un intervalle de temps autorisé prédéfini et dans lequel la génération d'un signal de sortie (86) n'est déclenchée que lorsqu'un nombre prédéfini de résultats de mesure des mesures individuelles se situe à l'intérieur de régions de mesure prédéfinies (82).

4. Procédé pour la commande d'appareils électriques (46) selon l'une quelconque des revendications précédentes, dans lequel le bloc fonctionnel du dispositif de commande qui est utilisé pour la mesure de distance (66, 72) et doit être désigné bloc de distance, est désactivé (84) avant la génération du signal de sortie.

5. Procédé pour la commande d'appareils électriques (46) selon l'une quelconque des revendications précédentes, dans lequel le dispositif de commande comprend un bloc fonctionnel destiné à effectuer une détection spatialement et temporellement sélective de séquences de mouvement (98) dans la région de détection (54), désigné ci-après bloc de mouvement, et dans lequel le procédé de commande comprend les autres étapes de procédé suivantes :
- détecter de manière spatialement et temporellement sélective une séquence de mouvement (98) de l'événement se situant dans la région de détection (54),
- générer un signal de sortie (86) qui dépend de la séquence de mouvement précédemment détectée.

6. Procédé pour la commande d'appareils électriques (46) selon la revendication 5, dans lequel la détection spatialement et temporellement sélective de séquences de mouvement (98) s'effectue par détection de la variation due à la séquence de mouvement de la valeur de luminosité d'un agencement de photodiodes.

7. Procédé pour la commande d'appareils électriques (46) selon l'une des revendications 5 ou 6, dans lequel, lorsqu'une luminosité ambiante est inférieure à une valeur prédéfinie, une charge optique de base définie au moins pendant la détection de séquences de mouvement au moyen d'une source lumineuse (11) est réglée (96).

8. Procédé pour la commande d'appareils électriques (46) selon l'une quelconque des revendications 5 à 7, dans lequel le bloc fonctionnel du dispositif de commande qui est utilisé pour la mesure de distance (66, 72) et doit être désigné bloc de distance, est désactivé (84) avant la détection spatialement et temporellement sélective de séquences de mouvement dans la région de détection.

9. Procédé pour la commande d'appareils électriques (46) selon l'une quelconque des revendications précédentes, dans lequel le récepteur de lumière du dispositif de commande est un agencement de photodiodes (8) et ledit agencement de photodiodes (9) est utilisé pendant un état de repos du dispositif de commande pour stocker de l'énergie électrique en quantité suffisante pour mettre en oeuvre le procédé de commande au moins jusqu'au début du cycle de mesure (76).

10. Dispositif conçu pour mettre en oeuvre le procédé de commande selon l'une quelconque des revendications précédentes, dans lequel le dispositif de commande comprend les composants suivantes :
- un système de mesure destiné à effectuer une mesure de distance, désigné bloc de distance,
- un système de mesure destiné à effectuer une détection spatialement et temporellement sélective de séquences de mouvement, désigné bloc de mouvement,
- au moins un émetteur de lumière (10) faisant partie du bloc de distance, destiné à émettre de la lumière dans l'espace de surveillance, dans lequel l'émetteur de lumière (10) peut être mis en fonctionnement de manière pulsée,
- un agencement d'une pluralité de photodiodes (8), agencées au moins en deux lignes, en tant que récepteurs de lumière (8) destinés à détecter un rayonnement qui est incident par réflexion sur un objet se trouvant dans l'espace de surveillance sur les récepteurs de lumière (8), dans lequel au moins certains des récepteurs de lumière peuvent être associés consécutivement soit au bloc de distance, soit au bloc de mouvement,
- une électronique de commande destinée à commander l'émetteur de lumière (10) et les récepteurs de lumière (8) de manière à ce que l'émetteur de lumière (10) émette des impulsions ayant des longueurs et/ou des intensités et/ou des cadences différentes et à ce qu'au moins certains des récepteurs de lumière (8) soient associés consécutivement soit au bloc de distance, soit au bloc de mouvement,
- une électronique d'évaluation destinée à évaluer un rayonnement émis et/ou reçu, à stocker des valeurs caractéristiques d'impulsions lumineuses ainsi que des caractéristiques de distribution des courants de photodiodes qui sont sélectionnées temporellement ou superficiellement sur la surface de l'agencement de diodes et à comparer des signaux optiques détectés et stockés ainsi que des caractéristiques de distribution, et
- un générateur de signal (40) au moyen duquel un signal de sortie peut être généré pour commander un appareil électrique externe.

11. Dispositif de commande selon la revendication 10, dans lequel deux émetteurs de lumière (10) destinés à émettre de la lumière dans des régions de longueur d'onde différentes sont disposés dans l'espace de surveillance (50) et dans lequel l'un de ceux-ci est associé par l'intermédiaire d'une partie dudit agencement de diodes (9) au bloc de distance et l'autre de ceux-ci est associé par l'intermédiaire d'une partie dudit agencement de diodes (9) au bloc de mouvement.

12. Dispositif de commande selon l'une quelconque des revendications 10 ou 11, dans lequel la longueur et/ou l'intensité et/ou le cadencement des impulsions de lumière peuvent être calculés et librement réglés au moyen de l'électronique de commande.

13. Dispositif de commande selon l'une quelconque des revendications 10 à 12, comprenant en outre une source de lumière (11) destinée à régler une charge de base optique définie.

14. Dispositif de commande selon l'une quelconque des revendications 10 à 13, comprenant en outre des condensateurs (48) qui peuvent être chargés et de nouveau déchargés au moyen du courant photoélectrique dudit agencement de diodes (9) pour stocker de l'énergie dans un environnement tel qu'au moins une mesure de distance (66, 72) peut être effectuée.

15. Dispositif de commande selon l'une quelconque des revendications 10 à 14, dans lequel les récepteurs de lumière (8) et l'émetteur ou les émetteurs de lumière (10) ainsi que l'électronique de commande, l'électronique d'évaluation et le générateur de signal (40), sont intégrés de manière monolithique, c'est-à-dire sont disposés sur une puce à semi-conducteur.
